# EUROPÄISCHE PATENTSCHRIFT

(11) **EP 2 318 263 B1**
(45) Veröffentlichungstag und Bekanntmachung des Hinweises auf die Patenterteilung: **25.04.2012**
(21) Anmeldenummer: 09778112.4
(22) Anmeldetag: 26.08.2009
(51) Int. Cl.: B62D 15/02, B60Q 1/48

(54) **VERFAHREN UND VORRICHTUNG ZUR UNTERSTÜTZUNG EINES EINPARKVORGANGS EINES FAHRZEUGS**
METHOD AND APPARATUS FOR SUPPORTING A PARKING PROCESS OF A VEHICLE
PROCÉDÉ ET DISPOSITIF POUR FACILITER UNE MANOEUVRE DE PARCAGE D'UN VÉHICULE

(30) Priorität: 02.09.2008 DE 102008045377
(43) Veröffentlichungstag der Anmeldung: 11.05.2011
(73) Patentinhaber: Valeo Schalter und Sensoren GmbH, 74321 Bietigheim-Bissingen (DE)
(72) Erfinder: BARTH, Harald, 70825 Korntal-Muenchingen (DE)
(86) Internationale Anmeldenummer: PCT/EP2009/006169
(87) Internationale Veröffentlichungsnummer: WO 2010/025865

(56) Entgegenhaltungen:
- EP-A- 1 602 530
- EP-A- 1 747 973
- DE-A1-102005 015 396
- DE-A1-102006 030 560

## Beschreibung

Die Erfindung betrifft ein Verfahren sowie eine Vorrichtung zur Unterstützung eines Einparkvorgangs eines Fahrzeugs in eine neben einer Fahrbahn angeordnete Längsparklücke der im Oberbegriff des Anspruchs 1 bzw. 8 genannten Art.

Aus der EP 1 602 530 Bl ist bereits ein Verfahren zur Unterstützung eines Einparkvorgangs eines Fahrzeugs in eine neben einer Fahrbahn angeordnete Längsparklücke bekannt, bei welchem das zu parkende Fahrzeug zunächst an der Längsparklücke vorbeifährt und diese mittels einer Messeinrichtung vermisst. Die Messeinrichtung umfasst dabei wenigstens einen seitlich am Fahrzeug angeordneten Abstandssensor, durch den beim Passieren der Längsparklücke deren Länge und Tiefe ermittelt werden. Darüber hinaus werden bei der Vorbeifahrt unmittelbar vor und nach dem Passieren der Längsparklücke von der Messeinrichtung Abstandsmessungen vorgenommen, um die Lage einer vorderen sowie einer hinteren Begrenzung der Längsparklücke, wie z. B. einem geparktem Auto zu bestimmen. Diese Messdaten werden einer Auswerteeinrichtung übermittelt, welche dann anhand der Lage von vorderer und hinterer Begrenzung die Parkposition des Fahrzeugs in der Längsparklücke festlegt .

Dabei wird z. B. durch die Messeinrichtung jeweils die Orientierung von vorderer und hinterer Begrenzung bestimmt und die Parkposition von der Auswerteeinrichtung so festgelegt, dass Orientierung des Fahrzeugs in der Parkposition dem Mittelwert der Orientierungen von vorderer und hinterer Begrenzung entspricht. Alternativ wird vorgeschlagen, mittels der Messeinrichtung die Positionen der vorderen und hinteren Begrenzungen zu ermitteln und das Fahrzeug in der Parkposition G parallel zu einer Verbindungslinie zwischen vorderer und hinterer Begrenzung auszurichten.

Das bekannte Verfahren liefert gute Ergebnisse für die Parkposition, wenn vordere und hintere Begrenzung etwa parallel zur Längsparklücke ausgerichtet sind. In der Praxis kann es jedoch vorkommen, dass eine der Begrenzung durch ein geparktes Fahrzeug gebildet ist, das schief oder in großem seitlichem Abstand zur Längsparklücke angeordnet ist. Dies führt dann dazu, dass das zu parkende Fahrzeug in seiner Parkposition ebenfalls schief auf dem Parkplatz angeordnet ist und in einen seitlich neben dem Parkplatz angeordneten Verkehrsraum hineinragen kann.

Aus der EP 1 747 973 A1 ist bereits ein gattungsgemäßes Verfahren zur Unterstützung eines Einparkvorgangs eines Fahrzeugs bekannt. Dabei wird mittels einer Sensoranordnung eine Länge und Tiefe einer Parklücke bei eine Vorbeifahrt erfasst und eine zugehörige Einparkbahn in eine Parkposition berechnet. Um die Länge und Tiefe der Parklücke mit verbesserter Genauigkeit zu erfassen, wird der Lenkwinkel des Fahrzeugs bei der Vorbeifahrt bestimmt und mit der Orientierung der Begrenzungsobjekte verglichen, um anhand des Vergleichs Korrekturwerte für die Länge und Tiefe der Parklücke zu berechnen.

Die DE 10 2006 030 560 A1 betrifft Verfahren zur Unterstützung eines Einparkvorgangs eines Fahrzeugs, bei dem eine Parklücke während einer Vorbeifahrt des Fahrzeugs mit einer Sensoranordnung vermessen wird. Während der Vorbeifahrt wird der Lenkwinkel des Fahrzeugs fortlaufend überwacht und bei einer kurvenförmigen Bewegungsbahn ein Korrekturwert für die Lange der Parklücke ermittelt.

Aus der DE 10 2005 015 396 A1 ist ein Verfahren zur Unterstützung eines Einparkvorgangs eines Fahrzeugs mit Vermessung einer Parklücke bei einer Vorbeifahrt bekannt, bei dem Position und Orientierung einer seitlichen Parklückenbegrenzung, wie z. B. einem Bordstein, anhand von Messwerten plausibilisiert wird, die vor und nach dem Passieren der Parklücke ermittelt wurden.

Aufgabe der Erfindung ist es, ein Verfahren und eine Vorrichtung zur Unterstützung eines Einparkvorgangs eines Fahrzeugs der im Oberbegriff des Anspruchs 1 bzw. 8 genannten Art dahingehend weiterzuentwickeln, dass die Parkposition des Fahrzeugs von der Auswerteeinheit in besonders zuverlässiger Weise festgelegt werden kann.

Diese Aufgabe wird erfindungsgemäß durch ein Verfahren gemäß Anspruch 1 sowie eine Vorrichtung gemäß Anspruch 8 gelöst. Weitere die Erfindung in vorteilhafter Weise ausgestaltende Merkmale enthalten die Unteransprüche.

Der mit der Erfindung erzielte Vorteil besteht darin, dass die Auswerteeinrichtung bei der Festlegung der Parkposition neben der Lage von vorderer und hinterer Begrenzung der Längsparklücke zusätzlich den Verlauf eines Fahrwegs des Fahrzeugs beim Passieren der Längsparklücke berücksichtigt. Der Verlauf des Fahrwegs beim Passieren der Längsparklücke liefert einen Anhaltspunkt für den Verlauf der neben dem Parkplatz verlaufenden Fahrbahn und kann daher zur Plausibilisierung der Lagen von vorderer und/oder hinterer Begrenzung herangezogen werden. Falls anhand der Lagen von vorderer und/oder hinterer Begrenzung keine optimale Ausrichtung der Parkposition zu erwarten ist, kann der Verlauf des Fahrwegs selbst als Referenz zur Ausrichtung der Parkposition herangezogen werden. Dabei hat der Fahrer die Möglichkeit, die Parkposition durch entsprechende Steuerung des Fahrzeugs bei der Vorbeifahrt an der Längsparklücke in einfacher Weise zu beeinflussen.

Die Auswerteeinrichtung vergleicht vorzugsweise die Lagen von vorderer und hinterer Begrenzung der Längsparklücke miteinander und legt die Parkposition anhand des Fahrwegs fest, wenn die Lagen der beiden Begrenzung mehr als eine vorgegebene Maximalabweichung voneinander aufweisen. Dadurch kann auch dann eine besonders zuverlässige Festlegung der Parkposition sichergestellt werden, wenn vordere oder hintere Begrenzung schief oder in großem seitlichem Abstand zur Längsparklücke angeordnet sind. Die Parkposition kann dabei besonders einfach und zuverlässig so festgelegt werden, dass die Orientierung des Fahrzeugs in der Parkposition einer gemittelten Orientierung des Fahrwegs entspricht. Um die Festlegung der Parkposition anhand des Fahrwegs noch weiter zu verbessern, können bei der Bestimmung der gemittelten Orientierung nur die Längenabschnitte des Fahrwegs berücksichtigt werden, die eine vorgegebene Maximalkrümmung oder Maximalstreubreite unterschreiten.

Dagegen legt die Auswerteeinrichtung die Parkposition vorzugsweise anhand der Lage von vorderer hinterer Begrenzung fest, wenn diese nicht mehr als die vorgegebene Maximalabweichung voneinander aufweisen. Bei Unterschreiten der Maximalabweichung ist anhand der Lage von vorderer hinterer Begrenzung eine besserer Positionierung zu erwarten als anhand des Fahrwegverlaufs. Dabei kann die Auswerteeinrichtung besonders einfach und zuverlässig die Orientierungen von vorderer und hinterer Begrenzung miteinander vergleichen und sofern, diese einen vorgegebenen Maximalwinkel nicht überschreiten, die Parkposition so festlegen, dass die Orientierung des Fahrzeugs dem Mittelwert der Orientierungen von vorderem und hinterem Hindernis entspricht.

Der Verlauf des Fahrwegs kann besonders einfach und kostengünstig über wenigstens einen Wegsensor und einen Lenkwinkelsensor der Messeinrichtung gemessen werden.

Vorzugsweise wird von der Auswerteeinrichtung jeweils die Längserstreckung von vorderer und/oder hinterer Begrenzung der Längsparklücke bestimmt und die Parkposition anhand des Fahrwegs festlegt, wenn die Längserstreckung, d. h. deren Erstreckung in Längsrichtung der Fahrbahn, von vorderer und/oder hinterer Begrenzung der Längsparklücke kleiner als eine vorgegebene Mindestlänge sind oder diese Begrenzungen von der Messeinrichtung nur über Länge kleiner als die vorgegebene Mindestlänge erkannt wurden. Dadurch wird sichergestellt, dass nur bei ausreichend langen Begrenzungen eine Orientierung der Parkposition anhand der Begrenzungen erfolgt, da in der Regel nur solche Begrenzungen einen ausreichenden Anhaltspunkt für die Orientierung der Parkposition geben. Darüber hinaus kann die Auswerteeinrichtung auch dann immer dann die Parkposition anhand des Fahrwegs festlegen, wenn die Messdaten für vordere und/oder hintere Begrenzung der Längsparklücke eine zu geringe Datenqualität aufweisen. Unter Datenqualität ist dabei insbesondere die Streuung von aufeinanderfolgenden Einzelmessungen zu verstehen.

Nachfolgend wird ein Ausführungsbeispiel der Erfindung anhand einer zeichnerischen Darstellung näher erläutert.

In der Darstellung zeigen jeweils in schematischer Draufsicht:
- Fig. 1: einen Einparkvorgang eines Kraftwagens in eine neben einer Fahrbahn angeordnete Längsparklücke und
- Fig. 2: einen Einparkvorgang des Kraftwagens in die Längsparklücke mit alternativer Festlegung der Parkposition.

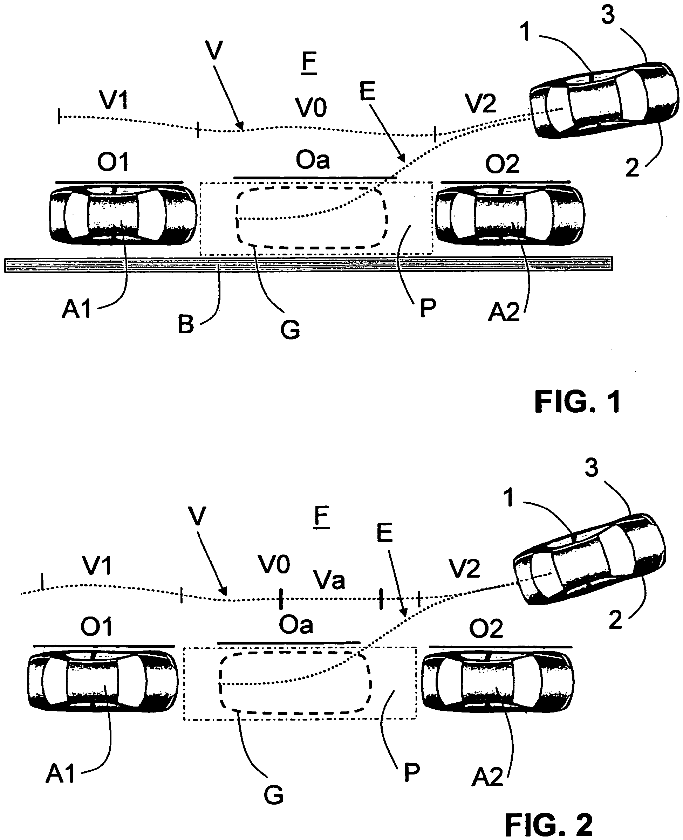

In Fig. 1 und 2 sind Einparkvorgänge eines Kraftwagens 1 in eine neben einer Fahrbahn F angeordnete Längsparklücke P in schematischer Draufsicht gezeigt. Die Längsparklücke P ist durch ein vorderes und ein hinteres Hindernis begrenzt, die jeweils durch ein geparktes Fahrzeug A1 bzw. A2 gebildet sind. Die seitlichen Begrenzungen der Längsparklücke P bilden die Fahrbahn F sowie ein im seitlichen Abstand zur Fahrbahn verlaufendes Hindernis in Form eines Bordsteins B.

Der Kraftwagen 1 weist eine Vorrichtung zur Unterstützung eines Einparkvorgangs auf, die eine Messeinrichtung sowie eine nicht gezeigte Auswerteeinrichtung umfasst. Die Messeinrichtung weist zwei seitliche Abstandssensoren 2 und 3, die jeweils nahe dem Fahrzeugbug auf der Fahrer- bzw. Beifahrerseite des Kraftwagens 1 angeordnet sind. Die Abstandssensoren 2 und 3 sind als an sich bekannte Ultraschall-Abstandssensoren ausgebildet und jeweils an einem seitlichen Rand eines vorderen Stoßfängers des Kraftwagens 1 angeordnet. Alternativ könnten die Abstandssensoren 2 und 3 aber auch nahe dem Fahrzeugheck, z. B an einem Heckstoßfänger angeordnet sein.

Die Abstandssensoren 2 und 3 sind mit einem nicht gezeigten Steuergerät verbunden und dazu ausbildet, seitlich neben dem Kraftwagen 1 angeordnete Objekte zu erkennen und deren seitlichen Abstand zum Kraftwagen 1 zu bestimmen. Über das Steuergerät werden die Abstandssensoren 2 und 3 so angesteuert, dass bei der Vorbeifahrt des Kraftwagens 1 an der Längsparklücke P entlang der Fahrbahn F zumindest die Längserstreckung der Längsparklücke P sowie Position und Orientierung der vor und hinter der Längsparklücke P geparkten Fahrzeuge A1 und A2 vermessen wird. Darüber hinaus können aber noch weitere geometrische Daten, wie die Tiefe der Längsparklücke P oder Verlauf und Orientierung des Bordsteins B durch Messung ermittelt werden. Die Längserstreckung und die ggf. zusätzlich ermittelten geometrischen Daten sind an eine Auswerteeinheit übertragbar, welche vorzugsweise integral mit dem Steuergerät ausgebildet ist und ein Speichermittel zur Speicherung dieser Daten umfasst.

Die Messeinrichtung des Kraftwagens 1 umfasst ferner einen nicht gezeigten Wegsensor zur Ermittlung eines Fahrwegs des Kraftwagens 1, wobei der Wegsensor als an sich bekannter Radsensor ausgebildet ist, welcher die Umdrehungen eines Fahrzeugrades misst. Anhand des Radumfangs ist die Messeinrichtung dann in der Lage, den vom Kraftwagen in Längsrichtung zurückgelegten Fahrweg zu bestimmen. Um den Fahrweg quer zur Längsrichtung zu bestimmen, umfasst die Messeinrichtung ferner einen nicht gezeigten Lenkwinkelsensor, über welchen bei der Vorbeifahrt des Kraftwagens 1 an der Längsparklücke P fortlaufend der vom Fahrer eingestellte Lenkwinkel gemessen wird. Der zeitliche Verlauf des Lenkwinkels wird von der Messeinrichtung an die Auswerteeinheit übermittelt, welche anhand der Daten von Lenkwinkelsensor und Fahrwegsensor fortlaufend die Position des Kraftwagens 1 bestimmt und den Verlauf des Fahrwegs V des Kraftwagens 1 bei der Vorbeifahrt an der Längsparklücke P mittels eines Speichermittels speichert.

Der Verlauf des Fahrwegs V stellt dabei eine zweidimensionale Kurve dar, die in der Ebene der Fahrbahn F verläuft. Die Auswerteeinheit ist dazu ausgebildet, anhand des Verlaufs des Fahrwegs V eine gemittelte Orientierung des Fahrwegs V festzulegen. Die gemittelte Orientierung des Fahrwegs V entspricht dabei einer gemittelten Tangente, die aus einzelnen Tangenten des Fahrwegs V bestimmt wird. Dabei kann die Auswerteeinheit Mittel umfassen, um den Verlauf des Fahrwegs V vor der Bestimmung der gemittelten Orientierung in geeigneter Weise zu glätten.

Die Auswerteeinheit umfasst neben den Speichermitteln einen Prozessor mit einem Programmcode, um anhand der von der Messeinrichtung übermittelten Daten eine Parkposition G des Kraftwagens 1 innerhalb des Parkplatzes P festzulegen und nachfolgend ausgehend von einer Startposition des Kraftwagens 1 eine Einparkbahn B zu ermitteln, entlang welcher der Kraftwagen 1 eine seine Parkposition G gefahren wird.

Die Auswerteeinheit ist dabei über ein Bussystem mit einer nicht gezeigten Lenkung des Kraftwagens 1 verbunden, um beim Einparken des Kraftwagens 1 die Lenkung derart anzusteuern, dass der Kraftwagen 1 ausgehend von seiner Startposition entlang der Einparkbahn B in seine Parkposition G überführt wird. Die Längsregelung des Kraftwagens 1, d. h. Gasgeben und Bremsen, wird dabei durch den Fahrer selbst vorgenommen. Alternativ könnte die Auswerteeinheit aber auch über das Datenbussystem mit Motorsteuerung und Bremse des Kraftwagens 1 verbunden sein, um einen vollautonomen Einparkvorgang zu ermöglichen.

Die Auswerteeinheit ist ferner dazu ausgebildet, dem Fahrer Informationen in Bezug auf den Einparkvorgang über eine Ausgabeeinrichtung, wie z. B. einem im Wageninnenraum angeordneten Display und/oder Tongeber auszugeben. Dabei können dem Fahrer z. B. Anweisungen in Bezug auf die Längssteuerung des Kraftwagens 1 aber auch zur Ansteuerung der Startposition für den Einparkvorgang zu übermitteln. Des Weiteren können dem Fahrer auch Anweisungen zur Lenkung des Kraftwagens 1 gegeben werden. Dabei ist es möglich, dem Fahrer Anweisungen zur manuellen Einstellung von bestimmten Lenkwinkeln zu übermitteln, so dass der Einparkvorgang vom Fahrer manuell anhand der Steueranweisung der Ausgabeeinrichtung vorgenommen wird. Auf eine Ansteuerung der Lenkung durch die Auswerteeinrichtung kann dabei verzichtet werden.

Der Einparkvorgang des Kraftwagens 1 in die Längsparklücke P läuft wie folgt ab:
Zunächst wird die Längsparklücke P während einer Vorbeifahrt gemessen. Die Daten werden dann von der Messeinrichtung an die Auswerteeinheit übertragen, welche dann eine Startposition für den Einparkvorgang, die Parkposition G des Kraftwagens 1 innerhalb der Längsparklücke P sowie eine Einparkbahn E festlegt.

Zur Vermessung der Längsparklücke P wird der Kraftwagen 1 vom Fahrer ausgehend von einer Startposition entlang der Fahrbahn F seitlich an der Längsparklücke P vorbeigefahren, wobei der Kraftwagen 1 dem durch den Fahrer mittels der Lenkung festgelegten Fahrweg V folgt. Dieser Fahrweg V wird - ausgehend von einem am Anfang der Messung festgelegten Referenzpunkt - fortlaufend mittels Wegsensor und Lenkwinkelsensor gemessen und von Auswerteinrichtung gespeichert.

Der Fahrweg V umfasst dabei einen ersten Fahrwegabschnitt V1, der im seitlichen Überdeckungsbereich mit dem hinter der Längsparklücke P geparkten Fahrzeug A1 verläuft. Während der Fahrt entlang dieses Fahrwegabschnitts V1 wird über den auf der Beifahrerseite angeordneten Abstandssensor 2 fortlaufend der seitliche Abstand des zu parkenden Kraftwagens 1 zum geparkten Fahrzeug A1 gemessen. Anhand der zu verschiedenen Zeiten gemessenen Abstandsdaten und des Verlaufs des Fahrwegabschnitts V1 bestimmt die Auswerteeinrichtung nachfolgend Position und Orientierung O1 des hinter der Längsparklücke geparkten Fahrzeugs A1. Mit Orientierung ist hier die Winkellage der fahrbahnzugewandten Breitseite des geparkten Fahrzeugs A1 in Bezug auf eine am Anfang der Messung festgelegte Referenzachse gemeint.

An den Fahrwegabschnitt V1 schließt sich ein Fahrwegabschnitt VO an, in welchem sich der zu parkende Kraftwagen 1 im seitlichen Überdeckungsbereich mit der Längsparklücke P bewegt. Der Übergang der beiden Fahrwegabschnitte wird dabei in an sich bekannter Weise über eine Änderung der vom Abstandssensor 2 gemessenen Abstandsdaten erkannt. Während der Fahrt entlang des Fahrwegabschnitts V0 wird über den Abstandssensor 2 fortlaufend der seitliche Abstand des Kraftwagens 1 zu dem die Längsparklücke P seitlich begrenzenden Bordstein B gemessenen. Anhand dieser Abstandsdaten und des Verlaufs des Fahrwegabschnitts V0 bestimmt die Auswerteeinrichtung nachfolgend Position und Orientierung eines Bordsteins B oder einer anderen fahrbahnabgewandten seitlichen Begrenzung der Längsparklücke P, sofern eine solche vorhanden ist.

An den Fahrwegabschnitt V0 schließt sich ein Fahrwegabschnitt V2 an, in welchem der Kraftwagen 1 im seitlichen Überdeckungsbereich mit dem vor der Längsparklücke geparkten Fahrzeug A2 fährt. Während der Fahrt entlang des Fahrwegabschnitts V2 werden in der bereits für den Fahrwegabschnitt V1 beschriebenen Weise von der Auswerteeinrichtung aus den Abstandsmessungen des Abstandssensors 2 Position und Orientierung 02 des vor der Längsparklücke P geparkten Fahrzeugs A2 bestimmt.

Aus den während der Vorbeifahrt an der Längsparklücke P gewonnenen Messdaten bestimmt die Auswerteeinrichtung dann nachfolgend eine Parkposition G des Kraftwagens 1 anhand folgendem Ablauf:
Zunächst werden Position und Orientierung O1 bzw. 02 der vor und hinter der Längsparklücke P geparkten Fahrzeuge A1 und A2 von der Auswerteeinheit miteinander verglichen. Falls die Positionen der beiden Fahrzeuge A1 und A2 einen seitlichen Abstand, d. h. einen Abstand quer zur Fahrbahn B, voneinander aufweisen, der kleiner oder gleich einem vorgegebenen, in der Auswerteeinheit gespeicherten Maximalabstand ist und außerdem die Orientierungen O1 und 02 von hinterem A1 und vorderem geparkten Fahrzeug A2 um nicht mehr als einen vorgegebenen, ebenfalls in der Auswerteeinheit gespeicherten Maximalwinkel voneinander abweichen, wird die Orientierung der Parkposition als Mittel-Wert der Orientierungen O1 und 02 festgelegt. Das heißt, die Mittel-Längsachse des Kraftwagen 1 weist in der Parkposition G gegenüber der anfangs festgelegten Referenzachse einen Winkel auf, welcher dem Mittelwert der Winkel der geparkten Fahrzeuge A1 und A2 gegenüber der Referenzachse entspricht.

Alternativ kann die Orientierung Ov der Parkposition G parallel zu einer Verbindungsachse der beiden geparkten Fahrzeuge A1 und A2 festgelegt werden. In diesem Fall kann es ausreichen, dass die Auswerteeinheit lediglich die Position der an die Längsparklücke P angrenzenden Endbereiche des vorderen A2 und des hinteren geparkten Fahrzeugs A1 bestimmt und die Orientierung Og der Parkposition G parallel zur Verbindungsachse dieser Endbereiche ausrichtet, sofern deren seitliche Abstand einen vorgegebenen Maximalwert nicht überschreitet.

Falls der seitliche Abstand der geparkten Fahrzeuge A1 und A2 größer als der vorgegebene Maximalabstand ist und/oder sich die beiden Orientierungen O1 und O2 sich um mehr als den vorgegebenen Maximalwinkel voneinander unterscheiden, wird die Orientierung der Parkposition anhand des Verlaufs des Fahrwegs V festgelegt. In Fig. 1 ist ersichtlich, dass die Auswerteeinheit dabei aus dem gespeicherten Verlauf des Fahrwegs V eine mittlere Orientierung ermittelt, welche einer gemittelten Tangente des Fahrwegs G entspricht. Die Parkposition G des Kraftwagens 1 wird dann so festgelegt, dass die Mittel-Längsachse des Kraftwagens 1 parallel zur gemittelten Orientierung des Fahrwegs V verläuft.

In Verbindung mit Fig. 2 ist ersichtlich, dass die Auswerteeinheit alternativ bei Bestimmung der gemittelten Orientierung des Fahrwegs V nur solche Längenabschnitte Va des Fahrwegs V heranzieht, die eine vorgegebene, in der Auswerteeinheit gespeicherte Maximalkrümmung nicht überschreiten. In Fig. 2 ist die beispielhaft für einen Fahrweg V mit einem einzigen hinreichend geraden Abschnitt Va gezeigt. Ferner können von der Auswerteeinheit jedoch auch mehrere hinreichend gerade Längenabschnitte des Fahrwegs V herangezogen werden. Dabei kann die Auswerteeinheit für jeden dieser hinreichend geraden Längenabschnitte separat eine mittlere Orientierung bestimmen und jeweils miteinander vergleichen. Zur Bestimmung der gesamten mittleren Orientierung des Fahrwegs V werden dann nur die separat gemittelten Orientierungen der einzelnen Längenabschnitte herangezogen, die sich voneinander um weniger als eine vorgegebene Maximalabweichung unterscheiden.

Um die Einflüsse von Messfehlern bei der Abstandsmessung auf die Parkposition G zu reduzieren, kann die Auswerteeinheit außerdem bei der Bestimmung der gemittelten Fahrwegorientierung nur solche Längenabschnitte des Fahrwegs V zu berücksichtigen, in denen bei zeitlich aufeinander folgenden Abstandsmessungen eine vorgegebene Maximalstreubreite nicht überschritten wird.

Falls die Längsparklücke P wie in Fig. 1 auf der Fahrbahn F abgewandten Seite durch einen Bordstein B begrenzt ist, kann der Verlauf des Bordsteins B zusätzlich zur Ermittlung der Parkposition G des Kraftwagens 1 herangezogen werden. Dabei wird von der Auswerteeinheit ein gemittelter Verlauf des Bordsteins B bestimmt, wobei auch hierbei nur die Längenabschnitte des Bordsteins B herangezogen werden können, bei denen eine vorgegebene Maximalkrümmung bzw. Messdatenstreubreite nicht überschritten wird.

Die Festlegung der Parkposition G des Kraftwagens 1 erfolgt dann nach folgendem Verfahren:
Falls bei der Vorbeifahrt von der Auswerteeinrichtung ein Bordstein B erkannt wird und die Streuung der zugehörigen Messdaten eine vorgegebene Schwelle nicht überschreitet, wird die Orientierung der Parkposition G anhand des Verlaufs des Bordsteins B festgelegt. Bei der Entscheidung ob die Messdaten des Bordsteins B verwendet werden, kann von der Auswerteeinheit zusätzlich geprüft werden, ob der Bordstein B über eine ausreichenden Längenabschnitt der Längsparklücke P erkannt wurde und ob der erkannte Bordstein B über einen hinreichenden Längenbereich gerade verläuft. Falls von der Auswerteeinheit kein Bordstein B erkannt wurde oder zwar ein Bordstein erkannt wurde, aber eines der oben genannten Qualitätskriterien verletzt wurde, wird die Orientierung der Parkposition G gemäß dem zuvor beschriebenen Verfahren anhand von Position und Orientierung der geparkten Fahrzeuge A1 und A2 bzw. des Verlaufs des Fahrwegs V bestimmt.

Die seitliche Position der Parkposition G innerhalb der Längsparklücke P wird von der Auswerteeinheit anhand der gemessenen Positionen der geparkten Fahrzeuge A1 und A2 oder anhand der Position des Bordsteins B oder einer anderen seitlichen Begrenzung der Längsparklücke P erfolgen. Dabei legt die Auswerteeinrichtung die Parkposition G vorzugsweise so fest, dass der Kraftwagen 1 einen vorbestimmten, in der Auswerteeinrichtung gespeicherten seitlichen Abstand zum Bordstein B aufweist. Falls kein Bordstein B vorhanden ist oder ein solcher nicht mit hinreichender Qualität vermessen werden konnte, wird die seitliche Lage der Parkposition G anhand der seitlichen Positionen der geparkten Fahrzeuge A1 und A2 festgelegt. Dabei wird die Parkposition G vorzugsweise so festgelegt, dass der Kraftwagen 1 einen vorbestimmten, in der Auswerteeinrichtung gespeicherten seitlichen Abstand zu einem der geparkten Fahrzeuge A1 oder A2 oder zu einer Verbindungsachse dieser Fahrzeuge aufweist.

Nach Festlegung der Parkposition G berechnet die Auswerteeinrichtung ausgehend von der Startposition des Kraftwagens 1 eine Einparkbahn E und zeigt dem Fahrer über die Ausgabeeinrichtung an, dass ein geführtes Einparken möglich ist. Zum Einparken wird der Kraftwagen 1 dann vom Fahrer nach Passieren des Parkplatzes P vorübergehend in einer Startposition gestoppt. Nach Stoppen des Kraftwagens 1 in der Startposition leitet der Fahrer durch Einlegen eines Rückwärtsganges den Einparkvorgang ein. Bei Einparken steuert der Fahrer durch Gas- und Bremseingriffe die Fahrgeschwindigkeit des Kraftwagens 1, während die Auswerteeinrichtung über das Bussystems des Kraftwagens 1 selbsttätig die Lenkung entsprechend der Einparkbahn E betätigt. Der Kraftwagen 1 fährt dann ausgehend von der Startposition rückwärts entlang der Einparkbahn E in seine Parkposition G.

## Patentansprüche

1. Verfahren zur Unterstützung eines Einparkvorgangs eines Fahrzeugs in eine neben einer Fahrbahn angeordnete Längsparklücke mit den Schritten:
Vorbeifahrt des Fahrzeugs an der Längsparklücke und Vermessen der Längsparklücke mittels einer Messeinrichtung, wobei die Messeinrichtung die Lage einer vorderen und/oder einer hinteren Begrenzung der Längsparklücke bestimmt,
Festlegung einer Parkposition des Fahrzeugs innerhalb der Längsparklücke mittels einer Auswerteeinrichtung anhand der Lage von vorderer und/oder hinterer Begrenzung und
Bestimmung einer Einparkbahn des fahrzeuges in die Parkposition mittels der Auswerteeinrichtung,
wobei der Verlauf des Fahrwegs (V) des Fahrzeugs (1) beim Passieren der Längsparklücke (P) von der Messeinrichtung gemessen und von der Auswerteeinrichtung zusätzlich bei der Festlegung der Parkposition (G) des Fahrzeugs (1) berücksichtigt wird,
**dadurch gekennzeichnet,**
**dass** die Parkposition (G) von der Auswerteeinrichtung so festgelegt wird, dass die Orientierung des Fahrzeugs (1) in der Parkposition (G) einer gemittelten Orientierung des Fahrwegs (V) entspricht.

2. Verfahren nach Anspruch 1,
**dadurch gekennzeichnet,**
**dass** die Auswerteeinrichtung die Lagen (O1, O2) von vorderer (Fahrzeug A2) und hinterer Begrenzung (Fahrzeug A1) der Längsparklücke (P) miteinander vergleicht und die Parkposition (G) anhand des Fahrwegs (V) festlegt, wenn die Lagen (O1, O2) von vorderer (Fahrzeug A2) und hinterer Begrenzung (Fahrzeug A1) sich um mehr als eine vorgegebene Maximalabweichung voreinander unterscheiden.

3. Verfahren nach Anspruch 2,
**dadurch gekennzeichnet,**
**dass** die Parkposition (G) von der Auswerteeinrichtung anhand der Lagen (O1, O2) von vorderer (Fahrzeug A2) und hinterer Begrenzung (Fahrzeug A2) festgelegt wird, wenn diese sich um weniger als die vorgegebene Maximalabweichung voneinander unterscheiden.

4. Verfahren nach Anspruch 3,
**dadurch gekennzeichnet,**
**dass** die Parkposition (G) von der Auswerteeinrichtung so festgelegt wird, dass die Orientierung (OV) des Fahrzeugs (1) dem Mittelwert der Orientierungen (O1, O2) von vorderer (Fahrzeug A2) und hinterer Begrenzung (Fahrzeug A2) entspricht, wenn diese Orientierungen (O1, O2) um nicht mehr als einen vorgegebenen Maximalwinkel voneinander abweichen.

5. Verfahren nach Anspruch 1,
**dadurch gekennzeichnet,**
**dass** bei der Bestimmung der gemittelten Orientierung des Fahrweges (V) nur die Längenabschnitte (Va) des Fahrwegs (V) berücksichtigt werden, die eine vorgegebene Maximalkrummung nicht überschreiten.

6. Verfahren nach einem der vorherigen Ansprüche,
**dadurch gekennzeichnet,**
**dass** der Fahrweg (V) des Fahrzeugs (1) über wenigstens einen Wegsensor sowie einen Lenkwinkelsensor der Messeinrichtung gemessen wird.

7. Verfahren nach einem der vorherigen Ansprüche,
**dadurch gekennzeichnet,**
**dass** die Auswerteeinrichtung die Längserstreckung von vorderer (Fahrzeuge A2) und/oder hinterer Begrenzung (Fahrzeug A1) der Längsparklücke (P) bestimmt und die Parkposition (G) anhand des Fahrwegs (V) festlegt, wenn die Längserstreckung von vorderer (Fahrzeug A2) und/oder hinterer Begrenzung (Fahrzeug A1) der Längsparklücke (P) kleiner als vorgegebene Mindestlänge sind

8. Vorrichtung zur Unterstützung eines Einparkvorgangs eines Fahrzeugs in eine neben einer Fahrbahn angeordnete Längsparklücke mit einer Messeinrichtung, um bei Vorbeifahrt des Fahrzeugs die Längsparklücke zu vermessen und die Lage einer vorderen sowie einer hinteren Begrenzung der Längsparklücke zu bestimmen, und mit einer Auswerteeinrichtung, um anhand der Lage von vorderer und/oder hinterer Begrenzung eine Parkposition des Fahrzeugs innerhalb der Längsparklücke festzulegen und eine Einparkbahn des Fahrzeuges in die Parkposition zu bestimmen,
wobei die Messeinrichtung Mittel umfasst, um den Verlauf des Fahrwegs (V) des Fahrzeugs (1) während des Passieren der Längsparklücke (P) zu messen, und die Auswerteeinrichtung dazu ausgebildet ist, den gemessenen Fahrweg (V) zusätzlich bei der Festlegung der Parkposition (G) des Fahrzeugs (1) zu berücksichtigen,
**dadurch gekennzeichnet,**
**dass** die Auswerteeinrichtung dazu ausgebildet ist, die Parkposition (G) so festzulegen, dass die Orientierung des Fahrzeugs (1) in der Parkposition (G) einer gemittelten Orientierung des Fahrwegs (V) entspricht.

9. Vorrichtung nach Anspruch 8,
**dadurch gekennzeichnet,**
**dass** die Auswerteeinrichtung dazu ausgebildet ist, die Lagen (O1, O2) von vorderer (Fahrzeug A2) und hinterer Begrenzung (Fahrzeug A1) der Längsparklücke (P) miteinander zu vergleichen und die Parkposition (G) anhand des Verlaufs des Fahrwegs (V) festzulegen, wenn die Lagen (O1, O2) von vorderer (Fahrzeug A2) und hinterer Begrenzung (Fahrzeug A1) sich um mehr als eine vorgegebene Maximalabweichung voneinander unterscheiden.

10. Vorrichtung nach Anspruch 9,
**dadurch gekennzeichnet,**
**dass** die Auswerteeinrichtung dazu ausgebildet ist, die Parkposition (G) anhand der Lage (O1, O2) von vorderer (Fahrzeug A2) und hinterer Begrenzung (Fahrzeug A1) festzulegen, wenn diese sich um weniger als die vorgegebene Maximalabweichung voneinander unterscheiden.

11. Vorrichtung nach Anspruch 10,
**dadurch gekennzeichnet,**
**dass** die Auswerteeinrichtung dazu ausgebildet ist, einen Mittelwert der Orientierungen (O1, O2) von vorderer (Fahrzeug A2) und hinterer Begrenzung (Fahrzeug A1) zu bestimmen und die Parkposition (G) so festzulegen, dass die Orientierung (Ov) des Fahrzeugs (1) dem Mittelwert der Orientierungen (O1, O2) von vorderer (Fahrzeug A2) und hinterer Begrenzung (Fahrzeug A1) entspricht, wenn diese beiden Orientierungen (O1, O2) um nicht mehr als einen vorgegebenen Maximalwinkel voneinander abweichen.

12. Vorrichtung nach einem der Ansprüche 8 - 11,
**dadurch gekennzeichnet,**
**dass** die Mittel zur Messung des Fahrwegs (V) wenigstens einen Wegsensor sowie einen Lenkwinkelsensor umfassen.

## Claims

1. Method for assisting a parking process of a vehicle into a longitudinal parking space which is arranged next to a carriageway, having the steps:
the vehicle travels past the longitudinal parking space and measures the longitudinal parking space by means of a measuring device, wherein the measuring device determines the position of a front boundary and/or of a rear boundary of the longitudinal parking space,
a parked position of the vehicle within the longitudinal parking space is defined by means of an evaluation device on the basis of the position of the front boundary and/or rear boundary and
a parking path of the vehicle into the parked position is determined by means of the evaluation device,
wherein the profile of the travel (V) of the vehicle (1) is measured by the measuring device as said vehicle (1) passes the longitudinal parking space (P) and is additionally taken into account in the definition of the parked position (G) of the vehicle (1) by the evaluation device.
**characterized**
**in that** the parked position (G) is defined by the evaluation device in such a way that the orientation of the vehicle (1) in the parked position (G) corresponds to an averaged orientation of the travel (V).

2. Method according to Claim 1,
**characterized**
**in that** the evaluation device compares the positions (O1, O2) of the front boundary (vehicle A2) and the rear boundary (vehicle A1) of the longitudinal parking space (P) with one another, and defines the parked position (G) on the basis of the travel (V) if the positions (O1, O2) of the front boundary (vehicle A2) and of the rear boundary (vehicle A1) differ from one another by more than a predefined maximum deviation.

3. Method according to Claim 2,
**characterized**
**in that** the parked position (G) is defined by the evaluation device on the basis of the positions (O1, O2) of the front boundary (vehicle A2) and the rear boundary (vehicle A1) if the latter deviate from one another by less than the predefined maximum deviation.

4. Method according to Claim 3,
**characterized**
**in that** the parked position (G) is defined by the evaluation device in such a way that the orientation (OV) of the vehicle (1) corresponds to the average value of the orientations (O1, O2) of the front boundary (vehicle A2) and of the rear boundary (vehicle A1) if these orientations (O1, O2) do not deviate from one another by more than a predefined maximum angle.

5. Method according to Claim 1,
**characterized**
**in that**, during the determination of the averaged orientation of the travel (V), only the longitudinal sections (Va) of the travel (V) which do not exceed a predefined maximum curvature are taken into account.

6. Method according to one of the preceding claims,
**characterized**
**in that** the travel (V) of the vehicle (1) is measured by means of at least one travel sensor and a steering angle sensor of the measuring device.

7. Method according to one of the preceding claims,
**characterized**
**in that** the evaluation device determines the longitudinal extent of the front boundary (vehicle A2) and/or of the rear boundary (vehicle A1) of the longitudinal parking space (P), and defines the parked position (G) on the basis of the travel (V) if the longitudinal extent of the front boundary (vehicle A2) and/or of the rear boundary (vehicle A1) of the longitudinal parking space (P) are shorter than a predefined minimum length.

8. Device for assisting a parking process of a vehicle into a longitudinal parking space which is arranged next to a carriageway, having a measuring device for measuring the longitudinal parking space as the vehicle travels past, and for determining the position of a front boundary and of a rear boundary of the longitudinal parking space, and having an evaluation device for defining a parked position of the vehicle within the longitudinal parking space and of determining a parking path of the vehicle into the parked position on the basis of the position of the front boundary and/or of the rear boundary,
wherein the measuring device comprises means for measuring the profile of the travel (V) of the vehicle (1) while said vehicle (1) passes the longitudinal parking space (P), and the evaluation device is designed to take into account the measured travel (V) in the definition of the parked position (G) of the vehicle (1),
**characterized**
**in that** the evaluation device is designed to define the parked position (G) in such a way that the orientation of the vehicle (1) in the parked position (G) corresponds to an averaged orientation of the travel (V) .

9. Device according to Claim 8,
**characterized**
**in that** the evaluation device is designed to compare with one another the positions (O1, O2) of the front boundary (vehicle A2) and of the rear boundary (vehicle A1) of the longitudinal parking space (P) and to define the parked position (G) on the basis of the profile of the travel (V), if the positions (O1, O2) of the front boundary (vehicle A2) and of the rear boundary (vehicle A1) differ from one another by more than a predefined maximum deviation.

10. Device according to Claim 9,
**characterized**
**in that** the evaluation device is designed to define the parked position (G) on the basis of the position (O1, O2) of the front boundary (vehicle A2) and of the rear boundary (vehicle A1) if the latter differ from one another by less than the predefined maximum deviation.

11. Device according to Claim 10,
**characterized**
**in that** the evaluation device is designed to determine an average value of the orientations (O1, O2) of the front boundary (vehicle A2) and of the rear boundary (vehicle A1) and to define the parked position (G) in such a way that the orientation (Ov) of the vehicle (1) corresponds to the average value of the orientations (O1, O2) of the front boundary (vehicle A2) and of the rear boundary (vehicle A1) if these two orientations (O1, O2) do not deviate from one another by more than a predefined maximum angle.

12. Device according to one of Claims 8 - 11,
**characterized**
**in that** the means for measuring the travel (V) comprise at least one travel sensor and one steering angle sensor.

## Revendications

1. Procédé d'assistance lors d'une manoeuvre de stationnement d'un véhicule dans un créneau de stationnement en longueur disposé à côté d'une voie de circulation, comprenant les étapes suivantes :
passage du véhicule à côté du créneau de stationnement en longueur et mesure du créneau de stationnement en longueur au moyen d'un dispositif de mesure, le dispositif de mesure déterminant la position d'une délimitation à l'avant et/ou à l'arrière du créneau de stationnement en longueur,
définition d'une position de stationnement du véhicule à l'intérieur du créneau de stationnement en longueur au moyen d'un dispositif d'interprétation à l'aide de la position de la délimitation à l'avant et/ou à l'arrière et détermination d'une trajectoire d'entrée en stationnement du véhicule dans la position de stationnement au moyen du dispositif d'interprétation,
le tracé du trajet de déplacement (V) du véhicule (1) en passant devant le créneau de stationnement en longueur (P) étant mesuré par le dispositif de mesure et en plus pris en compte par le dispositif d'interprétation lors de la définition de la position de stationnement (G) du véhicule (1),
**caractérisé en ce**
**que** la position de stationnement (G) est définie par le dispositif d'interprétation de telle sorte que l'orientation du véhicule (1) dans la position de stationnement (G) correspond à une orientation moyenne du trajet de déplacement (V).

2. Procédé selon la revendication 1, **caractérisé en ce que** le dispositif d'interprétation compare entre elles les positions (O1, O2) de la délimitation à l'avant (véhicule A2) et à l'arrière (véhicule A1) du créneau de stationnement en longueur (P) et définit la position de stationnement (G) au moyen du trajet de déplacement (V) lorsque les positions (O1, O2) de la délimitation à l'avant (véhicule A2) et à l'arrière (véhicule A1) présentent entre elles une différence supérieure à un écart maximum.

3. Procédé selon la revendication 2, **caractérisé en ce que** la position de stationnement (G) est définie par le dispositif d'interprétation au moyen des positions (O1, O2) de la délimitation à l'avant (véhicule A2) et à l'arrière (véhicule A1) lorsque celles-ci présentent entre elles une différence inférieure à un écart maximum.

4. Procédé selon la revendication 3, **caractérisé en ce que** la position de stationnement (G) est définie par le dispositif d'interprétation de telle sorte que l'orientation (Ov) du véhicule (1) correspond à la valeur moyenne des orientations (O1, O2) de la délimitation à l'avant (véhicule A2) et à l'arrière (véhicule A1) lorsque ces orientations (O1, O2) présentent entre elles une différence qui n'est pas supérieure à un angle maximum prédéfini.

5. Procédé selon la revendication 1, **caractérisé en ce que** lors de la détermination de l'orientation moyenne du trajet de déplacement (V), seules sont prises en compte les sections longitudinales (Va) du trajet de déplacement (V) qui ne dépassent pas une courbure maximale prédéfinie.

6. Procédé selon l'une des revendications précédentes, **caractérisé en ce que** le trajet de déplacement (V) du véhicule (1) est mesuré par le biais d'au moins un capteur de course ainsi qu'un capteur d'angle de direction du dispositif de mesure.

7. Procédé selon l'une des revendications précédentes, **caractérisé en ce que** le dispositif d'interprétation détermine la projection longitudinale de la délimitation à l'avant (véhicule A2) et/ou à l'arrière (véhicule A1) du créneau de stationnement en longueur (P) et définit la position de stationnement (G) à l'aide du trajet de déplacement (V) lorsque la projection longitudinale de la délimitation à l'avant (véhicule A2) et/ou à l'arrière (véhicule A1) du créneau de stationnement en longueur (P) est inférieure à une longueur minimale prédéfinie.

8. Dispositif d'assistance lors d'une manoeuvre de stationnement d'un véhicule dans un créneau de stationnement en longueur disposé à côté d'une voie de circulation, comprenant un dispositif de mesure pour mesurer le créneau de stationnement en longueur lors du passage du véhicule à côté de celui-ci et déterminer la position d'une délimitation à l'avant ainsi qu'à l'arrière du créneau de stationnement en longueur, et comprenant un dispositif d'interprétation pour définir une position de stationnement du véhicule à l'intérieur du créneau de stationnement en longueur à l'aide de la position de la délimitation à l'avant et/ou à l'arrière et pour déterminer une trajectoire d'entrée en stationnement du véhicule dans la position de stationnement,
le dispositif de mesure incluant des moyens pour mesurer le tracé du trajet de déplacement (V) du véhicule (1) pendant le passage devant le créneau de stationnement en longueur (P) et le dispositif d'interprétation étant configuré pour en plus prendre en compte le trajet de déplacement (V) mesuré lors de la définition de la position de stationnement (G) du véhicule (1),
**caractérisé en ce**
**que** le dispositif d'interprétation est configuré pour définir la position de stationnement (G) de telle sorte que l'orientation du véhicule (1) dans la position de stationnement (G) correspond à une orientation moyenne du trajet de déplacement (V).

9. Dispositif selon la revendication 8, **caractérisé en ce que** le dispositif d'interprétation est configuré pour comparer entre elles les positions (O1, O2) de la délimitation à l'avant (véhicule A2) et à l'arrière (véhicule A1) du créneau de stationnement en longueur (P) et pour définir la position de stationnement (G) au moyen du tracé du trajet de déplacement (V) lorsque les positions (O1, O2) de la délimitation à l'avant (véhicule A2) et à l'arrière (véhicule A1) présentent entre elles une différence supérieure à un écart maximum.

10. Dispositif selon la revendication 9, **caractérisé en ce que** le dispositif d'interprétation est configuré pour définir la position de stationnement (G) au moyen des positions (O1, O2) de la délimitation à l'avant (véhicule A2) et à l'arrière (véhicule A1) lorsque celles-ci présentent entre elles une différence inférieure à un écart maximum.

11. Dispositif selon la revendication 10, **caractérisé en ce que** le dispositif d'interprétation est configuré pour déterminer une valeur moyenne des orientations (O1, O2) de la délimitation à l'avant (véhicule A2) et à l'arrière (véhicule A1) et pour définir la position de stationnement (G) de telle sorte que l'orientation (Ov) du véhicule (1) correspond à la valeur moyenne des orientations (O1, O2) de la délimitation à l'avant (véhicule A2) et à l'arrière (véhicule A1) lorsque ces deux orientations (O1, O2) présentent entre elles une différence qui n'est pas supérieure à un angle maximum prédéfini.

12. Dispositif selon l'une des revendications 8 à 11, **caractérisé en ce que** les moyens de mesure du trajet de déplacement (V) comprennent au moins un capteur de course ainsi qu'un capteur d'angle de direction.
